(19) Europäisches Patentamt
European Patent Office
Office européen des brevets

(11) **EP 2 656 137 B1**

(12) **EUROPEAN PATENT SPECIFICATION**

(45) Date of publication and mention of the grant of the patent:
**16.09.2015 Bulletin 2015/38**

(51) Int Cl.:
***G02B 27/30*** (2006.01)   ***G02B 3/00*** (2006.01)
***G02B 6/26*** (2006.01)   *G02B 6/02* (2006.01)

(21) Application number: **11850180.8**

(22) Date of filing: **21.12.2011**

(86) International application number:
**PCT/US2011/066677**

(87) International publication number:
**WO 2012/088361 (28.06.2012 Gazette 2012/26)**

(54) **MULTICORE COLLIMATOR**

MEHRKERN-KOLLIMATOR

COLLIMATEUR À NOYAUX MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2010 US 201061425685 P**

(43) Date of publication of application:
**30.10.2013 Bulletin 2013/44**

(73) Proprietor: **OFS Fitel, LLC
Norcross, GA 30071 (US)**

(72) Inventors:
• **ABEDIN, Kazi, S.
Basking Ridge, NJ 07920 (US)**
• **TAUNAY, Thierry, F.
Bridgewater, NJ 08807 (US)**
• **YAN, Man, F.
Berkeley Heights, NJ 07922 (US)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**US-A- 5 712 937      US-A- 5 757 993
US-A- 6 097 869      US-A1- 2002 181 100
US-A1- 2003 113 067      US-A1- 2003 179 993
US-A1- 2005 175 276      US-A1- 2008 180 683
US-A1- 2009 201 575      US-B1- 7 400 804
US-B2- 6 958 968**

Description

## BACKGROUND OF THE INVENTION

### Field of the Invention

The present invention relates generally to the field of fiber optics and in particular to an improved multicore collimator.

### Background Art

Optical fibers that have multiple cores are potentially attractive as transmission links in order to meet the ever-increasing demand for greater bandwidth. Each core is designed to carry optical signals independently. Thus, transmission capacity is increased proportionately with the number of cores in the fiber.

There has been growing interest in the development of multicore fibers with low crosstalk that are suitable for long-distance transmissions. Deployment of a fiber optic transmission link using multicore fiber depends in significant part on the successful realization of other key devices, both passive and active, including: multicore fiber amplifiers, multicore WDMs, isolator/circulators, tunable filters, attenuators, and so on. While such components are commercially available for single-mode fibers, these components are generally not suitable for multicore applications. It has thus become crucial to develop similar devices having multicore inputs and outputs.

One important component in many types of optical transmission links is a collimator, which is a device that reduces the divergence of a light output. A collimator is typically used in a link in which a free-space beam output is provided at an endface of an optical fiber. A crucial specification parameter of a collimator is its "working distance," i.e., the maximum distance from the beam source at which the collimated beam retains its spot size (i.e., smallest radius).

In a passive optical component assembly, light from an input fiber is commonly first collimated using a lens, propagated in free space through a bulk optical element, and then coupled into an output fiber using another lens. In such a collimating system, the relationship between the free-space working distance d, and the spot size (or spot radius) $\omega_0$ and wavelength $\lambda$ of the free-space Gaussian beam can be expressed as

$$d = 2 \cdot z_o$$

where, $z_o$, also known as Rayleigh length, is defined as:

$$z_o = \frac{\pi \omega_0^2}{\lambda}$$

For example, choosing $\omega_0$ = 0.5mm and $\lambda$ = 1.55 $\mu$m yields a working distance d = 2·$z_0$ = ~1m.

It is also known that the divergence angle of a beam $\theta$ is related to spot size according to the equation $\theta = \lambda/(\pi\omega_o) = \omega_o/z_o$. To reduce beam divergence for collimator applications, it is desirable to increase spot size to the extent that it does not exceed in size of bulk optical element to be placed near the beam spot.

The problem is how to collimate light exiting from each individual core of a multicore fiber. One approach would be to provide a plurality of lenses configured into an array, wherein each lens corresponds to an individual MCF core, and is used in a way similar to that described above. However, the problem is that, due to the relatively small spacing between the cores, the mode field diameter (MFD) of the collimated beam must be kept smaller than the spacing between neighboring cores in order to avoid overlap of the beams and crosstalk of signals between neighboring cores. This requirement results in a working distance too small for the placement of a bulk optical element.

For example, if core-to-core spacing $\Lambda_1$ (measured between two adjacent cores, from core center to core center) is 40 $\mu$m for the multicore fiber, a suitable maximum spot size for the collimating beam $\omega_0$ (max) could be approximately 10 $\mu$m, in order to avoid overlapping of the fields of neighboring cores. In that case, 2·$z_o$ becomes as small as 400 $\mu$m. Such a small working distance makes it difficult, if not impossible, to incorporate bulk optical elements such as filters, Faraday rotator, waveplates, and the like, to realize an optically functional device.

Publication US 7 400 804 B1 discloses a multicore collimator for collimating light transmitted by the respective cores of a multicore comprising a lens-array including a plurality of individual lenses corresponding to the respective

**EP 2 656 137 B1**

cores of the multicore, a taper at an input-end of the array of lenses for providing a tapered transition between the core-to-core spacing of the multicore fiber and the lens-lo-lens spacing of the array of, wherein the array of lenses receives and collimates light transmitted by the multicore fiber through the taper and provides the collimated light as an output at an output end of the lens array.

Accordingly, new methods and devices for collimating multicore light are desired.

## SUMMARY OF THE INVENTION

A multicore collimator collimates light signals transmitted by respective cores of a multicore fiber. An array of gradient-index lens includes a plurality of individual gradient-index lenses corresponding to respective cores of the multicore fiber. The plurality of gradient-index lenses extends through a lens array body between an input end and an output end thereof and has a lens-to-lens spacing that is larger than the core-to-core spacing of the multicore fiber. A taper at the input end of the array of gradient-index lenses provides a tapered transition between the core-to-core spacing of the multicore fiber and the lens-to-lens spacing of the array of gradient-index lenses. The array of gradient-index lenses is configured to collimate the light signals outputs from the coupler, and to provide the collimated light signals as an output at the output end of the array of gradient-index lenses.

## BRIEF DESCRIPTION OF THE DRAWINGS

FIGS. 1A-1C show a series of diagrams illustrating a first example of a multicore collimator according to an aspect of the invention. FIG. 1D is a graph illustrating the concept of "pitch," as it relates to axial periodicity in gradient-index lenses.

FIG. 2 is a cross section diagram illustrating core-to-core spacing in an exemplary 7-core multicore fiber.

FIGS. 3A and 3B are a pair of diagrams illustrating a tapered fiber segment having a refractive index profile with a mode field-maintaining pedestal.

FIG. 4 is a diagram illustrating a number of parameters relating to collimators.

FIGS. 5 and 6 show a pair of graphs in which loss is plotted against distance between GRIN lenses.

FIGS. 7A and 7B are a pair of cross section diagrams illustrating alternative core spacings in a graded-index multicore fiber.

FIG. 8 is a cross section diagram of a generic device employing two multicore collimators according to aspects of the invention.

FIG. 9 is a graph in which mode field diameter is plotted as a function of position.

FIG. 10A is a cross section diagram of a multicore collimator according to a further practice of the invention, employing a tapered GRIN lens array. FIG. 10B is a graph in which mode field diameter and GRIN lens core diameter are plotted as a function of position for the collimator shown in FIG. 10A.

FIG. 11A is a cross section diagram of a collimator in which a portion of the GRIN lens array is tapered to provide a transition between the core spacing of a multicore fiber and the wider spacing at the output endface of the GRIN lens array. FIG. 11B is a graph in which mode field diameter and GRIN lens core diameter are plotted as a function of position for the collimator shown in FIG. 11A.

FIG. 12 shows an exploded view of a multicore collimator that is used in conjunction with a multimode multicore transmission fiber.

FIG. 13 is a diagram of a multicore focuser according to an aspect of the invention.

FIG. 14 is a diagram of a generic optical device employing first and second multicore collimators connected to respective first and second multicore fibers.

FIG. 15 is a diagram of a tunable multicore optical filter according to an aspect of the invention.

FIG. 16A is a diagram illustrating the operation of a multicore isolator based on two multicore collimators, in accordance with an aspect of the invention. FIG. 16B is a diagram illustrating the operation of the multicore isolator when light rays travel in the reverse direction.

FIG. 17 is a diagram of a multicore circulator according to an aspect of the invention.

FIG. 18 is a diagram of a multicore variable attenuator according to an aspect of the invention.

FIG. 19 is a diagram illustrating the orientation of the optical axis of a birefringent walk-off block relative to a multicore collimated beam. FIG. 19A is a diagram illustrating the deflection of a light beam by the birefringent walk-off block.

FIG. 20A is a diagram of an optical isolator employing a multi-segment birefringent walk-off plate. FIGS. 20B and 20C show, respectively, front and side views of a birefringent walk-off block that deflects light radially.

FIGS. 21A-21C are a series of diagrams illustrating alternative examples of a multicore wavelength-division multiplexer according to aspects of the invention.

3

FIG. 22 is a diagram of a dichroic, dielectric mirror suitable for use in devices employing multicore collimators in accordance with various described aspects of the invention.

FIG. 23 is a diagram of a pumping system employing a pair of multicore collimators in accordance with an aspect of the invention.

## DETAILED DESCRIPTION

Aspects of the invention are directed to structures and techniques for providing independent, in-fiber collimation of the respective outputs of each core of a multicore fiber (MCF), wherein the working distance is significantly longer than that achievable in the prior art.

The present discussion is organized as follows:

1. Multicore Collimator

    1.1 Overview
    1.2 Exemplary Collimator Assembly
    1.3 Calculating the Length of the GRIN Lens
    1.4 Techniques for Fabricating Components of Collimator Assembly

2. Exemplary Structures and Techniques

    2.1 Generic Device
    2.2 Tapered GRIN Lens
    2.3 Collimating Light into and out of Multimode Multicore Fibers
    2.4 Alternative Locations for Bulk Optic Devices
    2.5 Multicore Relay Lens System
    2.6 Multicore Tunable Filter
    2.7 Multicore Isolators
    2.8 Multicore Circulators
    2.9 Multicore Variable Attenuator
    2.10 Requirements for Birefringent Walk-Off Blocks
    2.11 Optical Isolator
    2.12 Multicore WDM or Coupler
    2.13 Dichroic Mirror
    2.14 Beam Combiner

3. Other Optical Devices
4. Conclusion

## 1. Multicore Collimator

### 1.1 Overview

An aspect of the invention is directed to a collimator assembly comprising: a first stage in which the respective light outputs of the cores of an MCF undergo in-fiber expansion, resulting in an increased core-to-core spacing; and a second stage, in which the expanded outputs undergo in-fiber collimation.

An aspect of the invention provides the capability of fanning out the MCF outputs prior to expansion in order to create a wider core-to-core spacing. The fan-out of the pre-expanded light outputs results in a correspondingly wider core-to-core spacing of the expanded light outputs. Thus, by suitably configuring the fan-out of the unexpanded light outputs, it is possible to achieve a spatial separation of the expanded light outputs that is sufficiently large so as to reduce or eliminate crosstalk therebetween.

With respect to beam curvature and beam divergence, it is noted that a beam is collimated at its waist, since wave fronts have an infinite curvature radius (i.e., become straight lines) at the beam waist. The beam divergence angle $\theta$ is inversely proportional to spot size $\omega_0$ according to the relationship $\theta = \lambda/(\pi\omega_0)$. Thus, for collimator applications it is generally desirable to increase spot size in order to reduce beam divergence.

**1.2 Exemplary Collimator Assembly**

An aspect of the invention is directed to a multicore collimator that combines a number of fiber-based technologies, including the following:

(1) structures and techniques in which a tapered multicore coupler, or like device, is used to increase core-to-core spacing in a multicore transmission link; and
(2) structures and techniques in which an array of gradient-index (or graded-index) lenses ("GRIN lenses"), or like devices, is used to collimate light from individual cores of a multicore fiber.

As used herein, the term "gradient-index" is synonymous with "graded-index." Thus, the term "GRIN lens" includes both gradient-index lenses and graded-index lenses.

As used herein, the term "GRIN lens" refers to a lens formed by a gradual variation in the refractive index of a suitable optical material. An array of GRIN lenses can be implemented as a multicore fiber comprising a plurality of cores within a common cladding, wherein each individual core has a pre-determined radial variation in refractive index so as to expand and collimate a respective individual input beam, and so as to achieve a long working distance.

As set forth below, a number of exemplary practices of the invention employ an in-fiber GRIN lens having a substantially parabolic profile. A further exemplary practice of the invention employs an in-fiber GRIN lens having a profile that deviates from a parabolic shape. It will therefore be appreciated that the techniques and structures described herein may suitably employ an in-fiber GRIN lens with a refractive index profile have any one of a number of different shapes, both parabolic and non-parabolic.

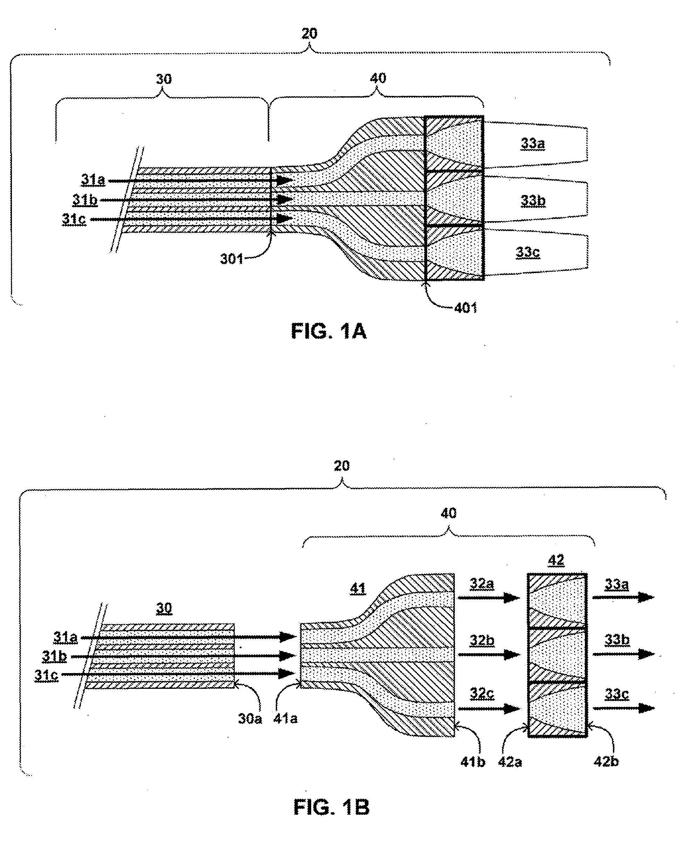

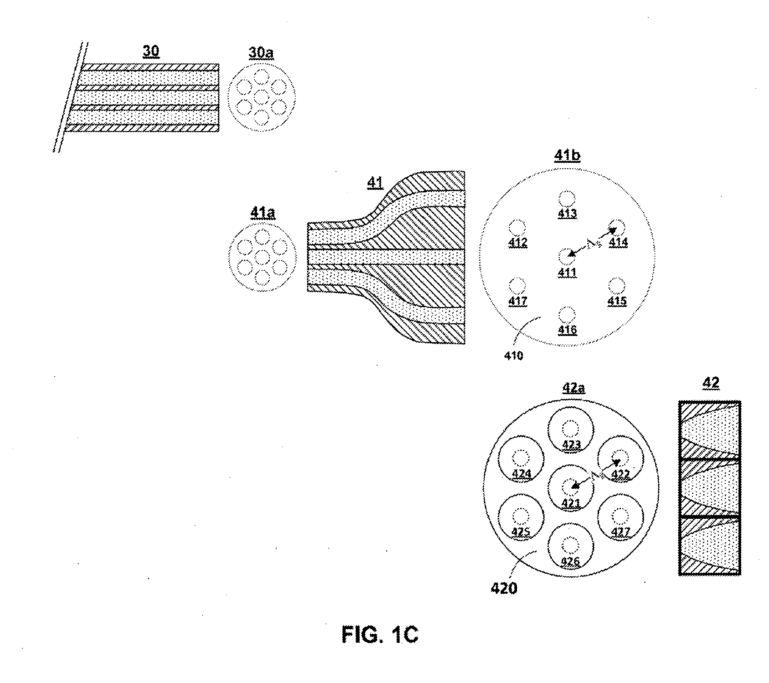

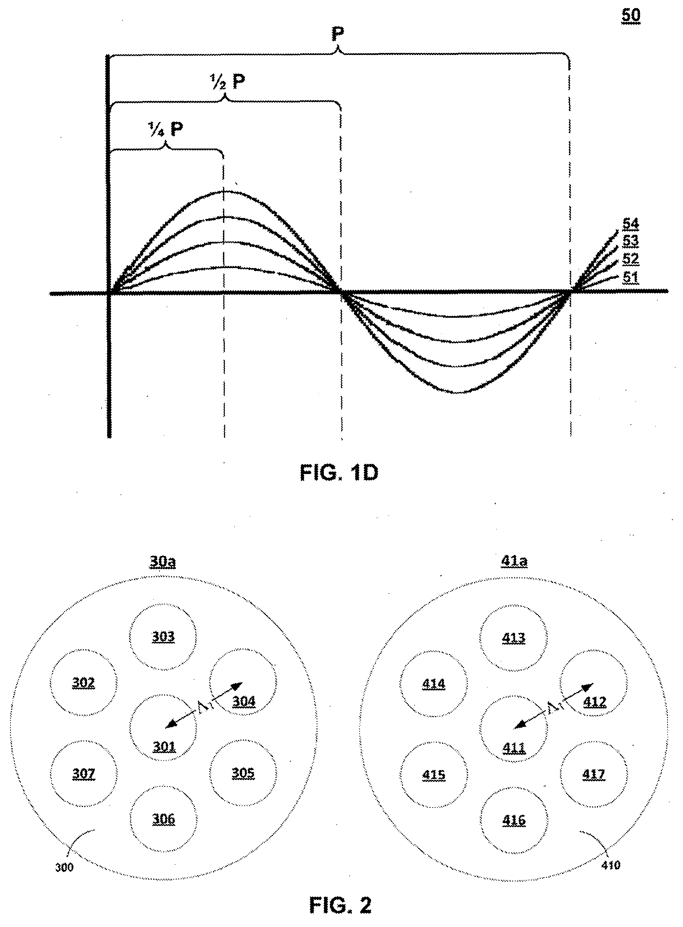

FIGS. 1-7 are a series of diagrams illustrating aspects of an exemplary collimating subsystem 20 according to a practice of the invention.

FIGS. 1A-1C show a series of views of a collimating subsystem 20 according to an aspect of the invention. In particular, FIGS. 1A-1C show, respectively: a cross section diagram, not drawn to scale, of an assembled collimating subsystem 20; an exploded cross section diagram of subsystem 20; and cross section and end views of the individual components of subsystem 20.

As shown in FIGS. 1A-1C, subsystem 20 comprises a single-mode, multicore fiber (MCF) 30, and a collimator assembly 40 having an endface 41 a that is spliced to a corresponding endface 30a of MCF 30. MCF 30 comprises a plurality of individual cores 301-307 (seen in FIG. 2) extending through a common cladding 300. The individual cores carry respective light signals 31a-31c, which propagate through collimator assembly 40 to produce respective collimated outputs 33a-33c. (For the purposes of illustration, FIGS. 1A and 1B show the signals 31a-c carried respectively by the top core 303, middle core 301, and bottom core 306 of MCF 30. It will be appreciated that the present description also applies to signals carried by cores 302, 304, 305, and 307.)

Collimator assembly 40 further comprises, at least, two components:

a single-mode taper (SMT) 41 comprising a cladding 410 that surrounds a plurality of individual single-mode cores 411-417 corresponding to respective individual cores 301-307 of MCF 30; and
a gradient-index (GRIN) lens array 42 comprising a segment of a multimode MCF fiber including having a cladding 420 that surrounds a plurality of individual multimode cores 421-427 corresponding to respective individual cores 411-417 of SMT 41. (For purposes of illustration, GRIN lens array endface 42a, shown in FIG. 2, includes broken-line circles indicating the position of the SMT cores 411-417 relative to the GRIN lenses 421-427 in the assembled collimator 40.)

SMT 41 serves to increase the core-to-core spacing of the light output of MFC 40 to match the lens-to-lens spacing of the individual lens elements in GRIN lens array 42. GRIN lens array 42 serves to collimate the light output of SMT 41.

As illustrated in FIG. 1B, light signals 31 a-31 c are launched as an input into SMT 41, which provides spaced-apart light signals 32a-32c as an output. The spaced-apart light signals 32a-32c are fed as an input into a GRIN lens array 42, where they are collimated. The collimated light signals 33a-33c are then provided as an output from an endface 42b of the GRIN lens array 42.

An example of a suitable fiber for use as MCF 30 is described in U.S. Patent App. Serial No. 13/045,064, filed on March 10, 2011, which is owned by the assignee of the present application. It should be noted that aspects of the invention may be practiced using multicore fibers or couplers different from those specifically shown and described herein.

As seen in FIG. 1C, the cores 301-307 of MCF 30, the cores 411-417 of SMT 41, and the cores 421-427 of GRIN lens array 42 are carefully aligned and matched so as to reduce coupling loss and unwanted crosstalk. GRIN lenses are suitable for working over a wide bandwidth range, which is important for wavelength-division multiplexed (WDM) signal transmissions. In that regard, it is noted that since one goal of a multicore fiber is to increase the bandwidth capacity of a single optical fiber by spatial multiplexing, the individual cores should individually be compatible with the highest possible capacity. This typically means that the crosstalk between the cores must be small, and the effective mode area must be sufficiently large for avoiding other nonlinear impairments.

Generally speaking, light propagating through a gradient-index (GRIN) lens follows an approximately sinusoidal path. The wavelength of this sinusoidal path is referred to as the pitch P (i.e., the axial periodicity) of the fiber.

FIG. 1D shows a graph 50 of four sine curves 51-54 having the same pitch P but different amplitudes, representing four exemplary paths through a fiber. In a parabolic GRIN fiber, the fiber is doped to create a series of propagation paths in which the transmission time along each path is the same, thereby eliminating group delay. Also shown in FIG. 1D are the quarter-pitch (¼ P) and half-pitch (½ P) distances along the x-axis.

It should be noted that, in the art, the word "pitch" is also used to describe the spacing between cores in a multicore fiber. For the purposes of clarity, in the present discussion, the term "pitch" refers only to axial periodicity, as described in the previous paragraph. The spacing between cores in a multicore fiber, measured from center to center, is referred to herein as "core-to-core spacing." It is further noted that, where the array of GRIN lenses comprises a plurality of cores of an optical fiber, the terms "core-to-core spacing" and "lens-to-lens spacing" are synonymous.

FIG. 2 is a diagram illustrating the core geometry at MFC output endface 30a and SMT input endface 41a. As shown in FIG. 2, both endfaces 30a and 41a have the same core-to-core spacing $\Lambda_l$. As illustrated in FIG. 1C, SMT 41 provides a transition between the core-to-core spacing $\Lambda_l$ at its input endface 41 a to a wider core-to-core spacing Ag at its output endface 41b, i.e., Ag > $\Lambda_l$. As is known from similar fused-fiber tapered devices, the SMT 41 can be designed, such that the respective mode field diameters (MFDs) of its individual cores 411-417 are approximately equal at the SMT input endface 41a and the SMT output endface 41b. Alternatively, the SMT 41 may be designed to couple with MCF 30 at its input end with low splice loss, while delivering a re-sized and possibly reshaped mode field to the array of GRIN lenses 42.

Re-sizing and reshaping can be useful for optimizing the design of the GRIN lens array. The design of GRIN lens components is typically constrained by core index contrast, core diameter and core spacing. According to an exemplary practice of the invention, a suitable design for the GRIN lenses in array 42 may be accomplished by surrounding the cores with raised-index pedestals that are configured to preserve the mode field diameter along the length of a tapered fiber region. Such pedestals are described for example in U.S. Pat. App. Serial No. 13/049,597, mentioned above. For the present purposes, the cores such as individual cores 411-417 are referred to as single-mode cores to represent the fact that they are configured to propagate signals which reside in the fundamental mode of the cores of MCF 30, even though the presence of a pedestal may allow propagation of more than one mode.

Furthermore, in some applications, it may be desirable to design SMT 41 to take additional considerations into account, such as to produce a guided wave that is more resistant to macrobending or microbending losses. Resistance to these types of losses can be important in minimizing leakage of light from one core to another in applications which require low signal crosstalk.

In addition, according to a further aspect of the invention, the length of SMT 41 is optimized (e.g., by reducing it) in order to create a an adiabatic transition between $\Lambda_l$ to $\Lambda g$. Coupling at the MCF-SMT junction 301 and at the SMT-GRIN junction 401 (FIG. 1A) can rely on careful matching of the modes, or on optimization of the duration and temperature of a fusion splice, if used. In the case of fusion splicing, the dopants and dopant distribution in the cores, pedestals and their adjacent regions of one or more sections may be selected to enhance or reduce the degree of diffusion, which would allow matching of the mode field diameters.

It will be appreciated that although SMT 41 is depicted as a separately formed component, it would also be possible to integrally form SMT 41 in conjunction with one or more other components. In that case, the cores of such other components may be configured to accommodate additional constraints imposed when the core diameter undergoes a significant change, as discussed below. Efficient core matching, elimination of coupling and splicing interfaces, and adiabatic transformations (i.e., no coupling to non-guided or higher-order modes) are desirable to avoid signal crosstalk.

The GRIN cores 421-427 are designed to transform the guided mode to a mode suitable for free-space propagation. If it assumed that each GRIN core 421-427 has an ideal parabolic index profile and that the guided mode has a perfect Gaussian mode field, then the optimal length of the GRIN lens array 42 (i.e., the length of the multimode, multicore fiber segment) will approximately a quarter of the pitch length (¼ P), given by

$$P = \frac{2\pi}{g}$$

where g is the gradient constant of the parabolic refractive index profile as expressed by

$$n = n_0 \left( 1 - \frac{g^2 r^2}{2} \right).$$

The optimum length approaches a quarter of a pitch (¼ P), as the maximum radius of the expanded beam $\omega_{02}$ gets much larger than the input mode field radius, $\omega_{01}$, i.e., where $\omega_{02} \gg \omega_{01}$. However, when $\omega_{02}$ has a value that is comparable with $\omega_{01}$, the length of the GRIN lens array 42 will be significantly longer than a quarter of the pitch (¼ P).

**1.3 Calculating Length of the GRIN Lens**

There are now described techniques, according to further aspects of the invention, for calculating the optimum length ($l_{opt}$) for the GRIN lenses in array 42, so as to provide a large working distance and a low coupling loss. For the purposes of the present discussion, it.is assumed that the propagation mode of the input light has a Gaussian shape, and wherein each GRIN lens has a parabolic refractive index profile.

If the shape of the mode field of the guided mode of SMT 41 is close to Gaussian at the junction between SMT 41 and GRIN lens array 42, then in order to achieve a long working distance, each core 421-427 of GRIN lens array 42 should have a parabolic radial index profile and a core diameter much larger than that of MCF 30. GRIN lens array 42 has a core-to-core spacing Ag (the same as the untapered end of section SMT 41) and a length slightly longer than an odd integral multiple of quarter of a pitch.

In ideal cases (i.e., input with Gaussian-shaped mode fields and GRIN lenses with perfectly parabolic refractive index profiles), the optimum length $l_{opt}$ can be derived analytically. In non-ideal cases, a beam propagation method (BPM), or other suitable technique, can be used to calculate optimal length, $l_{opt}$, to account for a non-Gaussian mode shape launched from SMT 41, and to also account for deviations from a parabolic index profile in the GRIN lens array 42.

When the centers of the cores of SMT 41 and GRIN lens array 42 are properly aligned, light from each core becomes collimated in free-space at the exit endface of GRIN lens array 42. In some instances, rather than collimating the beam, it is desirable to focus or produce an otherwise modified beam in free space. This can be accomplished by modifying the details of the GRIN design which in turn may be influenced by the parameters of the mode exiting MCF 30 and the desired properties of the beam propagating in free space after exiting GRIN lens array 42. For example, if the guided modes are non-Gaussian, then a non-Gaussian index profile would be used for GRIN lens array 42. Suitable structures and techniques for creating desired non-Gaussian profiles are described in U.S. Patent No. 7,340,138, which is owned by the assignee of the present application.

Note that after suitable expansion in SMT 41 from $\Lambda_l$ to Ag, conventional individual lenslets can also be used to collimate, focus or expand the mode in free space instead of using GRIN lens array 42.

In some designs, for highest possible bandwidth capacity, the cores of the multicore fiber may carry multiple modes rather than only a single mode. In such cases, the number of modes is likely to be far less than in conventional multimode fiber, which uses cores of diameter 62.5μm or 50μm. It is more likely that a core of a multicore fiber in the inventive design may carry on the order of ten or so modes. SMT 41 should be designed to optimize the coupling of all modes present to minimize both crosstalk and optical loss between MCF 30 and the collimated free-space output.

By widening the core-to-core spacing from $\Lambda_l$ to $\Lambda_g$ through the use of SMT 41 or like structure, light from individual cores can be collimated to a larger spot size without causing overlapping of beams. The larger spot size also ensures a longer working distance. For example, if Ag = 200 μm, and MFD ($2 \cdot \omega_0$) of the collimated beam is half of $\Lambda_g$, the working distance $2 \cdot z_0$ becomes 10mm. It will be seen that the working distance has been increased by a factor of 25.

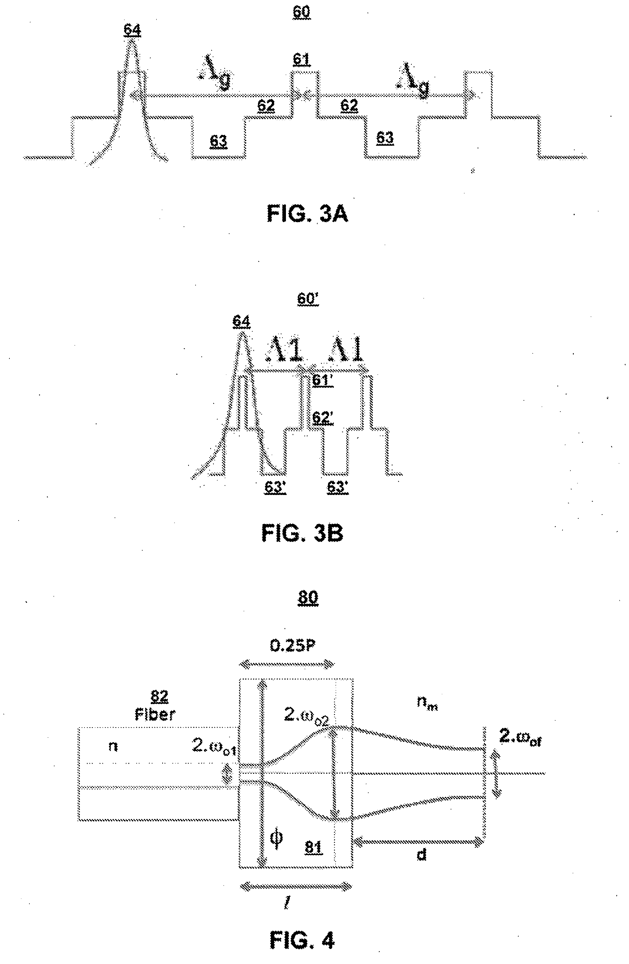

FIGS. 3A and 3B show refractive index profiles of an exemplary SMT 41, before tapering 60 and after tapering 60'. Each core 61/61' is surrounded by a pedestal region 62/62', which is further surrounded by a cladding 63/63'. Normally in the un-tapered fiber, light is guided by the core 61 with the pedestal 62 acting as the cladding. As shown in FIG. 3B, when the fiber is tapered, the core 61' of the fiber becomes too small to confine the mode 64, and the light becomes mainly guided by the pedestal region 62'. Tapering this fiber can thus result in.an exponential change in core-to-core spacing, while the MFD can be kept relatively unchanged, if desired. A suitable tapering technique is described in U.S. Patent Pub. No. 2008/0267560, which is owned by the assignee of the present application.

The working distance $d$ (as shown in FIG. 4) refers to the distance between the lens and the location of minimum spot size. As discussed above, in order to accommodate bulk optical elements, it is crucial to choose the length of the GRIN lens appropriately so that the working distance $d$ of the collimated beam, in free space is maximized.

FIG. 4 is a diagram of an exemplary collimation system 80, employing a GRIN lens 81, that illustrates a number of parameters relating to working distance $d$. When light from a single-mode fiber 82 with a Gaussian shape and beam spot radius $\omega_{01}$ is launched into a GRIN lens, the longest working distance $d_{max}$ that can be achieved in the medium outside the lens is given by

$$d_{\max} = \frac{\pi n_m}{2\lambda}\left(\omega_{02}^2 - \omega_{01}^2\right). \tag{1}$$

where $n_m$ is the refractive index of the medium outside the lens.

As illustrated in FIG. 4, $\omega_{02}$ is the Gaussian beam parameter corresponding to the most expanded region of the beam inside the GRIN lens, which occurs after propagating through a quarter of the pitch of the GRIN lens, i.e., 0.25P. This is the so-called ¼ pitch condition. For collimation of light, the diameter of the GRIN lens should be sufficiently larger than $\omega_{02}$ to avoid the electric field being clipped by the side of the lens. For a Gaussian beam parameter $\omega_{02}$, the fraction of power lost at the boundary of GRIN lens with diameter $\varphi$ is given by

$$\exp\left[\frac{-\varphi^2}{\left(2\omega_{02}^2\right)}\right].$$

For example,

for $\varphi = 2\omega_{02}$, the loss will be 13.5% ; and
for $\varphi = 4\omega_{02}$, the loss will be 0.03% .

Therefore, to reduce loss, the diameter of the GRIN lens should be about four times $\omega_{02}$, or more.

The value of the $g$ parameter of the GRIN lens, which transforms the Gaussian beam parameter $\omega_{01}$ at the input of the lens to $\omega_{02}$ at a quarter-pitch-location, can be obtained from

$$g = \frac{\lambda}{\pi n \omega_{01} \omega_{02}} \qquad \text{Eq. (2)}$$

and the length of the GRIN lens $l_{opt}$, which provides the longest working distance $d_{max}$, and spot size of the collimated beam outside the lens (i.e., in free space, or in a suitable medium with index $n_m$), $\omega_{0f}$ can be obtained from Eq. (3) and Eq. (4):

$$gl_{opt} = \pi - \tan^{-1}\left(\frac{\omega_{02}}{\omega_{01}}\right) \text{ where } gl_{opt} > \pi/2 \qquad \text{Eq. (3)}$$

$$\omega_{0f(opt)} = \sqrt{\left(\omega_{01}^2 + \omega_{02}^2\right)/2}, \qquad \text{Eq. (4)}$$

Since $\omega_{01} \neq 0$, we have $gl_{opt} > \pi/2$ from Eq. 3, which means that, in a practice of the invention, the length of the GRIN lens is slightly longer than ¼ P. It is noteworthy that, when $\omega_{02} >> \omega_{01}$, which is typical to conventional single core collimator, we have

$$l_{opt} = \pi/(2g) = 0.25\text{P}.$$

Also, from Eq. (1) we see that to obtain a large working distance, we would prefer small $\omega_{01}$ and large $\omega_{02}$. As shown in FIG. 3, use of a pedestal fiber design allows $\omega_{01}$ to remain small.

When two collimators having parameters as shown in FIG. 4 are placed facing each other, and the length between them is chosen to be $2d_{max}$, (calculated using Eq. 1), the fiber-to-fiber coupling loss will be the minimum.

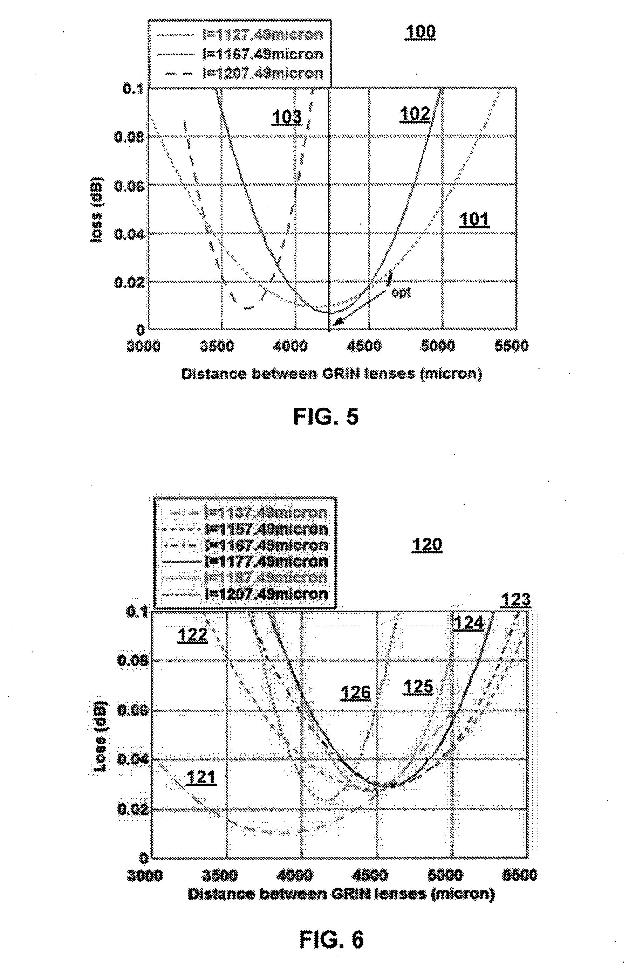

FIG. 5 shows a graph 100 illustrating the calculated coupling loss, plotted as a function of spacing between GRIN lenses having three different lengths $l$.

It should be noted that, while coupling loss varies significantly with the spacing between GRIN lenses, an optimal spacing can be found that yields the minimum coupling loss for a given length *l*. Upon preparation of GRIN lenses within a range of *l* values illustrated in FIG. 5, it is possible to tailor the lens-to-lens spacing to achieve the minimum coupling loss below 0.01 dB.

The present example assumes the use of standard single mode input and output fibers, free space coupling, and a parabolic index profile for the GRIN lenses. It is further assumed that:

$\lambda$=1.55 $\mu$m ;
input and output fiber core diameter=8.2 $\mu$m ;
input and output fiber $\Delta$n=0.005 ;
$\omega_{01}$=5.1 $\mu$m ;
$n_m$ =1 ;
GRIN lens diameter= 200 $\mu$m ;
GRIN lens $\Delta$n=0.0152 ;
$g$ =1.44/mm.

Applying Eqs. 1-4 yields::

$\omega_{02}$= 46.01 $\mu$m,
$2d_{max}$ = 4238.8 $\mu$m,
$l_{opt}$ = 1167.49 $\mu$m.

Note that $l_{opt}$ is 7% larger than the quarter pitch length (1090 $\mu$m).

The values calculated by the analytically derived equations are in agreement with the results obtained by numerical simulation using beam propagation method (BPM). As it can be seen in the simulations, the largest working distance achieved with a minimum loss is 4238 $\mu$m, and the corresponding length of the lens is 1167 $\mu$m (solid line).

It should be noted that when the space between the GRIN lenses is filled by a material other than air, the maximum working distance will be increased by a factor that depends on the refractive index $n_m$ of the material. For silica glass ($n_m$=1.46), it is expected that $2d_{max}$=6187 $\mu$m. If the silica glass partially occupies the intermediate space, the expected working distance is between 4238 $\mu$m and 6187 $\mu$m.

For collimating light from individual cores of the SMT 41, one may also choose GRIN lenses with a length that is slightly larger than an odd multiple of quarter of pitch, i.e., 0.25NP (where N is an odd integral). To be precise the length can be obtained from,

$$g l_{opt} = M.\pi - \tan^{-1}\left(\frac{\omega_{02}}{\omega_{01}}\right), \qquad (5)$$

where M is an arbitrary integer.

The Rayleigh range and spot size of the output Gaussian beam is essentially determined by the input condition of the GRIN lens and the exact shape of the refractive index profile. If the GRIN profile is not perfectly parabolic, i.e.

$$n = n_0\left(1 - \frac{g^\alpha r^\alpha}{2}\right) \qquad (6)$$

where $\alpha$ is close but not exactly 2, it is expected that there will be a slight deviation in the value of $2d_{max}$ and $l_{opt}$ from that obtained from Eq. 1 and 3.

FIG. 6 is a graph 120 illustrating numerically calculated (BPM) coupling loss as a function of GRIN lens spacing, where length a is chosen to have a value of 2.05, rather than 2.0. All fiber and GRIN lens parameters are assumed to be the same as used in the simulations illustrated in FIG. 5.

Any deviation from parabolic shape results in slightly higher losses for a longer working distance. The GRIN lens spacing corresponding to the lowest loss points of the curves depend on the length of the lenses. The largest spacing obtained is 4600 $\mu$m that occurs for an approximate length ~ *l* =1167 $\mu$m. This results is quite similar to the result obtained using Eq. 3. In practice, the optimum length of the lens can be determined through a compromise of the constraints given on the coupling loss and the working distance.

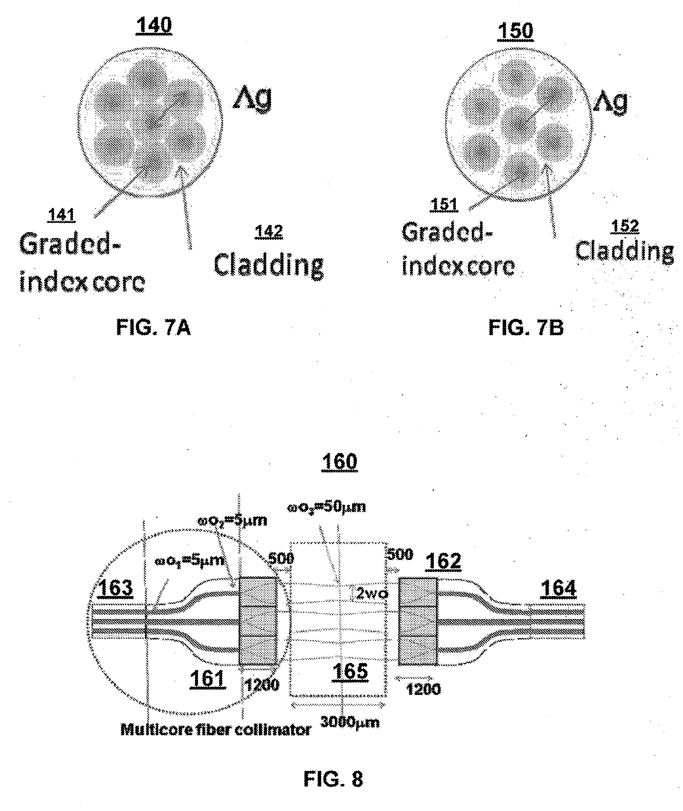

FIGS. 7A and 7B are a pair of cross section diagrams 140, 150, illustrating exemplary core configurations in a multimode multicore fiber (MCF) used for light collimation. MCFs 140 and 150 comprise a plurality of multimode cores 141, 151 surrounded by a cladding 142, 152. The MCF cores 141, 151 provide an array of GRIN lenses, having a lens-to-lens spacing of Λg. In FIG. 7A, the GRIN cores 141 are placed in close proximity. In FIG. 7B, the MCF cores 151 are separated by cladding material 152 with a refractive index lower than that at the edge of the GRIN cores in order to reduce crosstalk between neighboring beams.

More sophisticated beam propagation methods may be required to calculate the precise Rayleigh range and spot size. However, the approach described above is useful for combining the fan-out and beam expansion elements described herein.

## 1.4 Techniques for Fabricating Components of Collimator Assembly

The components of MCF 30, SMT 41 and GRIN lens array 42 may be fabricated using any of the known methods for optical fiber fabrication. One such method comprises inserting a bundle of conventional or modified optical fiber preforms into a tube and drawing into fiber while holding the interstitial spaces at pressure lower than ambient. The cores of the preform would correspond to the desired fiber characteristics, such as single-mode core in MCF 30, pedestal design in MC 41, or graded index multimode in GRIN lens array 42. To inhibit core deformation and increase accuracy of core positioning, the interstitial holes may be filled with solid rods (round or otherwise) or silica grains. Alternatively, the rods or inside surface of the surrounding tube may be shaped to exclude interstices, such as using hexagonally-shaped preforms inside a tube with a hexagonal inner bore.

Although the above examples employ MCFs with a hexagonal arrangement of cores, the fiber cores can assume any kind of geometrical arrangement, including a linear arrangement, a square pattern, or patterns having other shapes. In some instances, one or more sections may have unused cores that are not present in other sections. For example, MCF 20 may have three cores spaced at some radius away from the center and at 120 degrees from each other, while GRIN lens array 42 has a full hexagonal close-packed complement of seven cores. This arrangement may be useful when only three cores are needed in MCF 30. In that case, eliminating the unnecessary SMT cores or GRIN lenses may reduce fabrication cost. It should be noted that it may nonetheless be desirable to use the depicted 7-lens GRIN array 42 in order to improve symmetry of the assembly during fabrication.

## 2. Exemplary Structures and Techniques

There are now described a number of exemplary structures and techniques employing, or relating to, multicore collimators. It will be appreciated that aspects of the invention may be practiced using implementations other than those specifically described below, including implementations in which some or all of the structures and techniques described herein are combined with each other, or with other structures and techniques.

It will be understood that the present invention is directed to the described collimator. Other described structures do not form part of the present invention and are not embodiments of the invention but rather illustrative examples that are useful in understanding the invention.

## 2.1 Generic Device

FIG. 8 is a diagram illustrating an example of a generic device 160 using the collimating techniques and structures described herein.

With respect to the exemplary practices of the invention discussed hereinbelow, the term "collimator" generally refers to a collimating subsystem according to aspects of the present invention, comprising an array of GRIN lenses and a tapering structure for coupling the array of GRIN lenses to a multicore fiber having a core-to-core spacing that is smaller than the lens-to-lens spacing of the GRIN array.

In FIG. 8, generic device 160 comprises first and second collimators 161 and 162 connected to respective first and second multicore fibers 163 and 164. A glass block 165 (*n*=1.45; 3 mm thickness) is included in the free space between the first and second collimators to simulate various bulk optical elements that would be required to make an optical device.

The combination of tapers and GRIN lenses allows collimation in free space between sending and receiving multicore fibers. In generic device 160, the spacing between the two GRIN lenses is 4000 μm. The width of the glass-block is 3000 μm; the total width of free space is 1000 μm.

The depicted assembly allows low-loss coupling between multicore fibers while jumping a wide gap into which is inserted some type of micro-optic element, simulated by glass block 165.

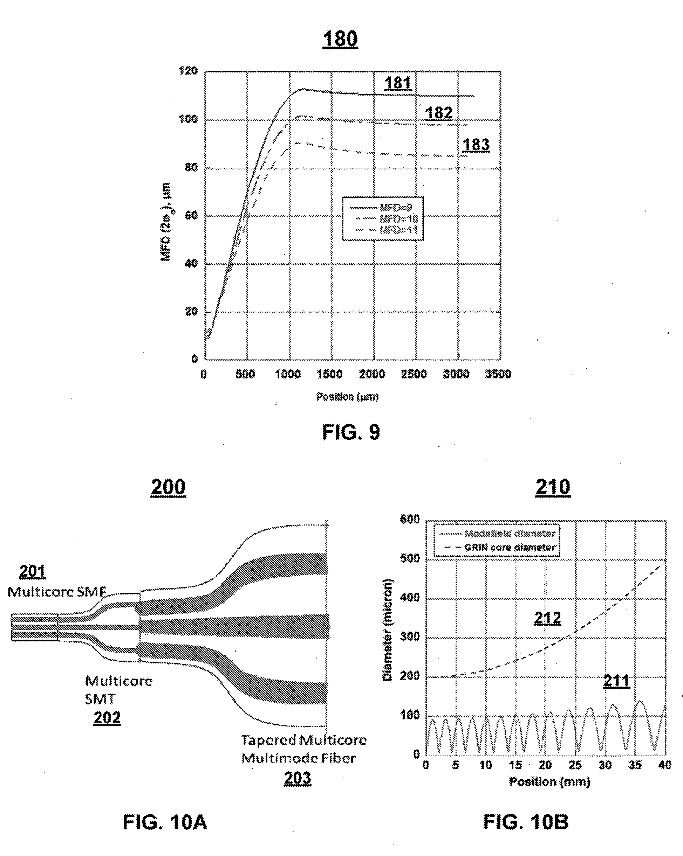

FIG. 9 is a graph 180 illustrating the calculated MFD as a function of distance measured from the input of the GRIN lens, i.e., the junction 401 between the SMT and the GRIN lens array. FIG. 9 shows the MFD of the Gaussian beam inside the GRIN lens and outside. Curves are plotted for input light with three different MFDs ($2\omega_{01}$): 9 μm (trace

181), 10 $\mu$m (trace 182), and 11 $\mu$m (trace 183). The multicore SMT 41 is designed such that the MFD remains essentially unchanged, i.e., $\omega_{o2} = \omega_{o1}$, while the radial core spacings increase substantially.

**2.2 Tapered GRIN Lens**

FIG. 10A is a diagram of a multicore collimator 200 coupled to a multicore SMF 201. Collimator 200 employs two stages: a multicore single-mode SMT 202, and a tapered GRIN lens array 203 comprising a multicore multimode fiber (T-MC-MMF).

As shown in FIG. 10A, instead of using a multimode GRIN lens array with a uniform diameter, it is also possible to use a tapered multimode GRIN lens array 203. To achieve a collimated beam with a large free-space spot size and a longer working distance, the GRIN lens length should be slightly longer than the point at which the MFD reaches a local maximum in its oscillatory profile. The axial taper profile can be linear, parabolic or any other shape that exhibits smooth variation along the length of the taper. If a suitable length is chosen as described above, light from each core can be collimated. The property of the beam emerging from the multicore multimode element can be arbitrarily controlled through the selection of a location along the beam path for a given optical element. For example, beam focusing can be achieved by choosing locations along the beam path that are close to the local minimum mode diameter.

FIG. 10B is a graph 210 illustrating $2\omega_0$ as a function of position as the multimode fiber is tapered in the GRIN lens array 203 shown in FIG. 10A. The input $2\cdot\omega_{o1}$ used in the calculations is 10.2 $\mu$m.

In graph 210, diameter changes according to a parabolic relationship. Trace 211 indicates mode field diameter. Trace 212 indicates GRIN core diameter. Graph 210 shows the mode field diameter $2\cdot\omega_{o2}$ inside the lens. The quantity $\omega_{o2}$ varies as a function of position. The peak value $\omega_{o2}$ also increases with position, as the lens diameter increases.

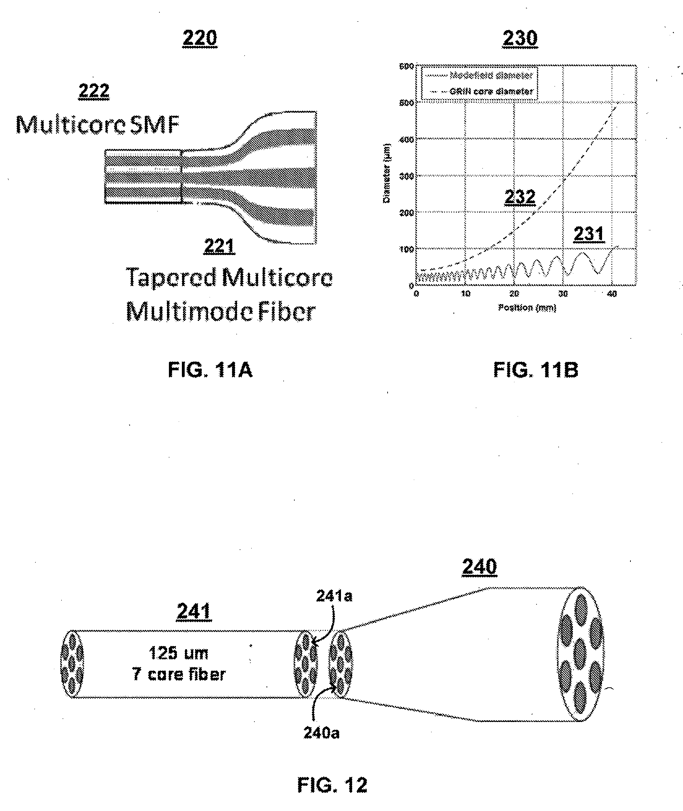

FIG. 11A is a diagram of a multicore collimator 220 according to a further practice of the invention, in which the tapered end of a multimode taper 221 is coupled directly to a multicore fiber 222, omitting a single-mode taper (e.g., SMT 202 shown in FIG. 10A).

FIG. 11B is a graph 230 illustrating $2\omega_0$ as a function of position as the multimode-fiber is tapered in the GRIN lens array 221 shown in FIG. 11A. In FIGS. The input $2\cdot\omega_{o1}$ used in the calculations is 10.1 $\mu$m. Trace 231 indicates mode field diameter. Trace 232 indicates GRIN core diameter. FIG. 11B shows the mode field diameter $2\cdot\omega_{o2}$ inside the lens. The quantity $\omega_{o2}$ varies as a function of position. The peak value $\omega_{o2}$ also increases with position, as the lens diameter increases.

It is noted that as the multimode GRIN fiber is tapered, the g parameter varies along the axial length of the fiber. In an ideal tapered GRIN lens, the mode field diameter follows a perfectly sinusoidal variation. It is necessary to determine the exact length of the lens that results in the maximum working distance. It is possible to adapt known formulae for Gaussian beam propagation through a GRIN lens with varying diameter. Alternatively, the exact length can be calculated using a beam propagation method.

**2.3 Collimating Light into and out of Multimode Multicore Fibers**

The above-described arrangements for collimating light into and out of single-mode multicore fibers can also be used to collimate light into or out of a multimode, multicore fiber. Collimating light into or out of multimode cores can be useful for coupling to an array of optical devices having wider pitches and larger element sizes, such as an array of vertical cavity surface-emitting laser (VCSEL) diodes.

FIG. 12 shows a diagram of a multimode collimator element 240 connected to an end of a multicore multimode fiber (MC-MMF) 241. The depicted multimode collimator element 240 comprises a tapered multicore multimode fiber (T-MC-MMF) having an input endface 240a having a geometry, including core-to-core spacing, matching that of MC-MMF endface 241a.

**2.4 Alternative Locations for Bulk Optic Devices**

A further aspect of the invention is directed to collimating systems, in which bulk optic devices have locations that are different than those described above. FIG. 8, for example, depicts a system in which a bulk optical element is placed within a region of the collimator beam output where the beam has an expanded diameter. For some applications, it may be desired to place a bulk optic device within a region of the collimator beam output where the beam has a narrower diameter, or even within a region proximate to the focal region.

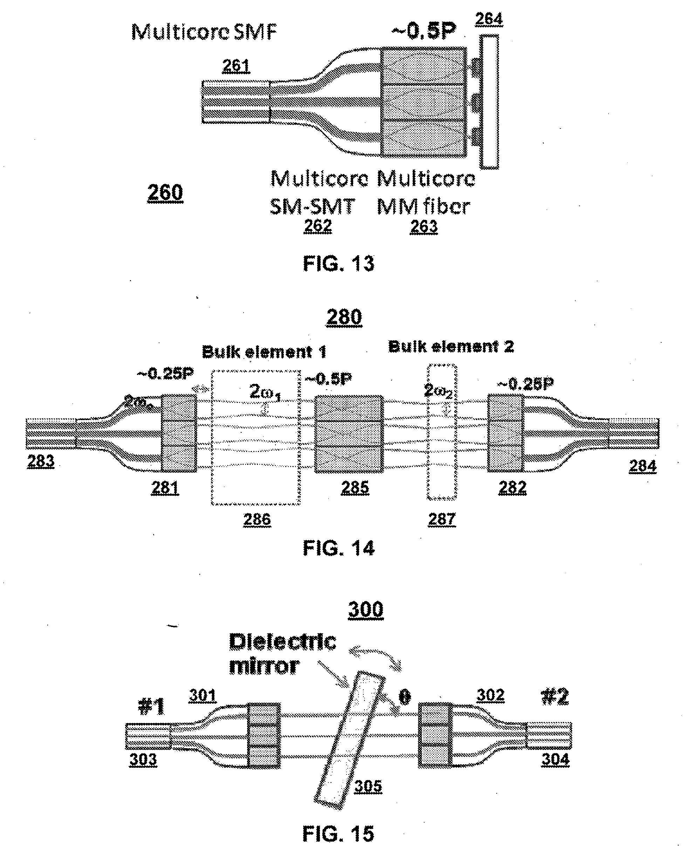

FIG. 13 is a diagram of a multicore focuser 260 according to a further practice of the invention. In the depicted example, multicore focuser 260 is connected an end of a multicore fiber 261, and comprises a multicore single-mode taper (SMT) 262, a multicore multimode fiber (MC-MMF) 263, and a micron-sized array of optical devices 264.

MC-MMF 263 has a nominal length of 0.5 P, or slightly shorter, and is configured to allow light received from individual cores of a multicore fiber 261 (which can be a single-mode or multimode fiber) to be focused onto respective individual optical devices in array 264.

By configuring the length of the MC-MMF 263 to have an actual length that deviates slightly the nominal length of 0.5P, it is possible to increase the output mode field to provide a better match with the optical devices in array 264. The optical devices in array 264 may include, for example, high-speed photodiodes, vertical cavity surface emitting lasers (VCSELs), or the like. The FIG. 13 multicore focuser 260 allows the core-to-core spacing to be increased from the relative close spacing of the transmission fiber 261 to a larger spacing that is configured to match the pitch P of the optical elements or devices in a given array 264.

### 2.5 Multicore Relay Lens System

FIG. 14 is a diagram of a multicore relay lens system 280, comprising first and second collimators 281 and 282 connected respectively to first and second MCFs 283 and 284. A lens array 285 is positioned in free space in between the first and second collimators 281 and 282. A first bulk optical element 286 is positioned in between first collimator 281 and a lens array 285. A second bulk optical element 287 is positioned in between the lens array 285 and second collimator 282. In the depicted example, each of the first and second bulk optical elements 286 and 287 are positioned within respective beam regions where the beam diameter is relatively small.

The configuration depicted in FIG. 14 allows the incorporation of a greater number of bulk optical elements as they become necessary.

### 2.6 Multicore Tunable Filter

FIG. 15 is a diagram of a multicore tunable filter 300 according to an aspect of the invention comprising first and second collimators 301 and 302 connected respectively to first and second MCFs 303 and 304. A dielectric mirror 305 is positioned in the free space region between collimators 301 and 302.

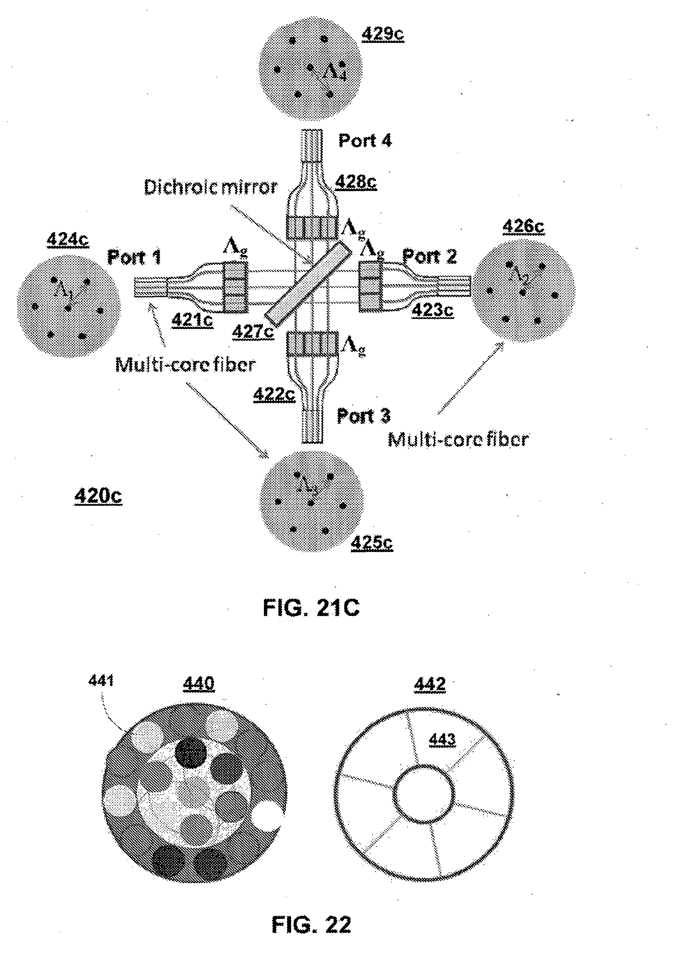

The dielectric-coated mirror 305 is used to control the transmission properties of filter 300. For example, the transmission properties can be controlled by varying the tilt angle θ of the dielectric mirror 305. According to a further practice, it would be possible to employ a multi-element dielectric mirror, such as that shown in FIG. 22, discussed below. Employing a mirror of that type would allow the transmission properties to be tuned by suitable rotational or translational movement the dielectric mirror, such as rotation of the mirror with respect to an axis that is perpendicular to the plane of the mirror.

### 2.7 Multicore Isolators

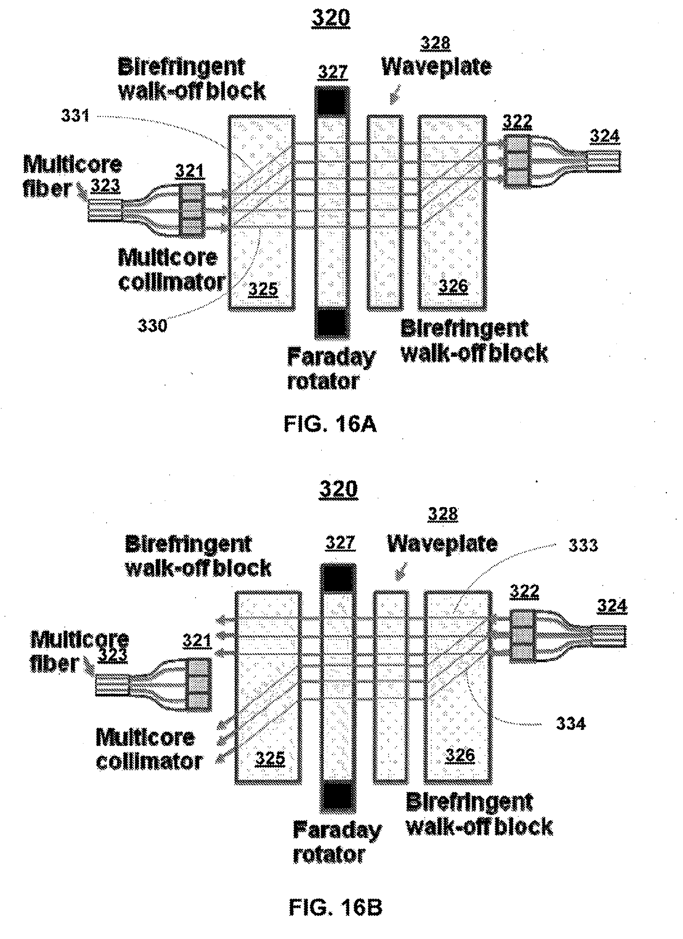

FIG. 16A is a diagram illustrating a multicore isolator 320, comprising first and second collimators 321 and 322 connected respectively to first and second MCFs 323 and 324. A first birefringent walk-off block 325 is positioned in free space at the output of first collimator 321, and a second birefringent walk-off block 326 is positioned in free space at the output of second collimator 322. Positioned in free space between the two birefringent walk-off blocks are a 45-degree Faraday rotator mirror 327 and a and a λ/2 waveplate (or phase retardation plate) 328. The collimated beams from the multicore collimators 321 and 322 are incident at a normal to the air-crystal interface of the birefringent blocks 325 and 326, and are split into two rays of orthogonal polarizations.

FIG. 16A illustrates the propagation of light through the isolator 320 in a left-to-right direction. As shown in FIG. 16A, "ordinary" rays 330 pass through without refraction but "extraordinary" rays 331 are refracted in an upward direction. Both the ordinary and extraordinary rays then proceed in a rightward direction through the Faraday rotator 327 and the waveplate 328, the combined effect of which causes each type of ray to be rotated through 90 degrees, i.e., such that their respective polarizations are swapped. The two types of rays then meet the second birefringent walk-off block 326, which is substantially identical with the first one. Because of their polarization states have been swapped, the two types of rays combine and exit through Port 2.

FIG. 16B illustrates the propagation of light 331 through the isolator 320 in a right-to-left direction. When light is input from Port 2, the right birefringent walk-off block 326 splits light into two orthogonal polarization components. However, in the right-to-left direction the effects of the waveplate and the Faraday rotator do not combine, but rather cancel each other out. Thus, the polarizations of the ordinary rays 333 and extraordinary rays 334 do not rotate. Because the polarizations have not been rotated, the left walk-off block 325 causes the two types of rays to become further separated from each other, rather than combining with each other. Therefore, high attenuation is experienced in a right-to-left direction of Port 2-to-Port 1.

### 2.8 Multicore Circulators

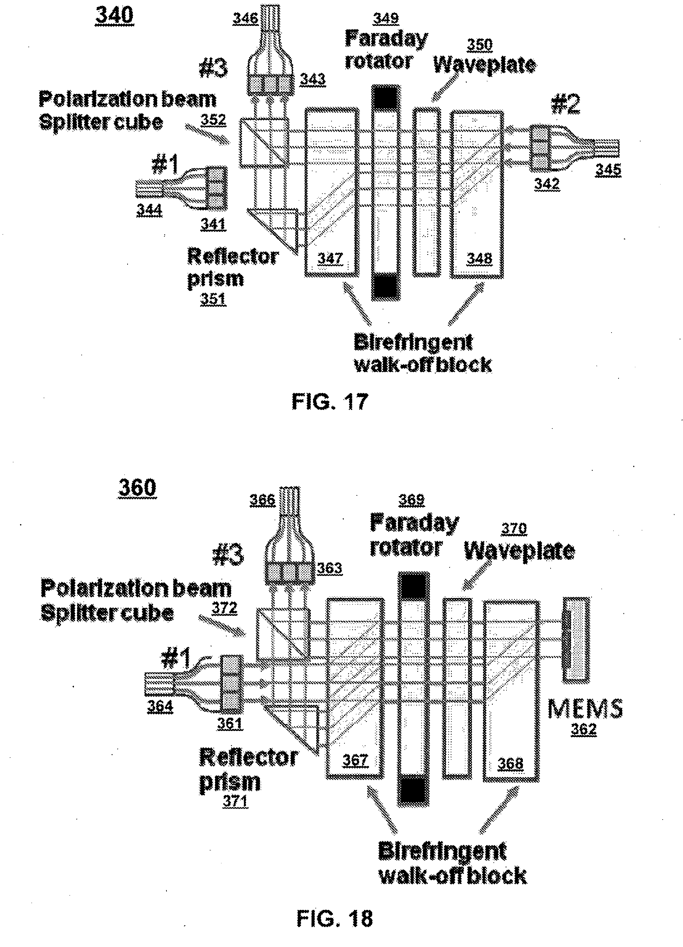

FIG. 17 is a diagram of a multicore circulator 340 according to a further aspect of the invention.

Circulator 340 comprises first, second, and third collimators 341-343 connected respectively to first, second, and third MCFs 344-346 (Port 1, Port 2, and Port 3). A first birefringent walk-off block 347 is positioned in free space at the output of first collimator 341, and a second birefringent walk-off block 348 is positioned in free space at the output of second collimator 342. Positioned in free space between the two birefringent walk-off blocks are a 45-degree Faraday rotator mirror 349 and a λ/2 waveplate (or phase retardation plate) 350. The collimated beams from the multicore collimator are incident at a normal to the air-crystal interface of the birefringent blocks, and are split into two rays of orthogonal polarizations. In addition, circulator 340 further comprises a reflector prism 351 and a polarization beam splitter cube 352.

The function of the multicore circulator shown in FIG. 17 is identical with the isolator in the propagation direction from Port 1 to Port 2. However, when light enters from Port 2, the orthogonally polarized light components are combined by the reflector prism 351 and the polarization beam splitter cube 352 and finally output to Port 3. Thus, low attenuation occurs in the direction from Port 1 to Port 2, and from Port 2 to Port 3.

### 2.9 Multicore Variable Attenuator

FIG. 18 is a diagram of a multicore variable attenuator 360, according to a further aspect of the invention, comprising a micro-electromechanical system (MEMS) 362 and a circulator comprising first and second collimators 361 and 363, MCFs 364 and 366 (Port 1 and Port 3), birefringent walk-off blocks 367 and 368, Faraday rotator 369, wave plate 370, reflector prism 371, and the polarization beam splitter cube 372.

The multicore variable attenuator 360 is similar in structure to the multicore circulator 340 shown in FIG. 17. However, instead of Port 2, MEMS mirrors 362 are used to reflect light that is finally provided as an output from Port 3. Transmission loss corresponding to each core can be individually controlled by suitably tilting the MEMS mirrors 362.

### 2.10 Requirements for Birefringent Walk-Off Blocks

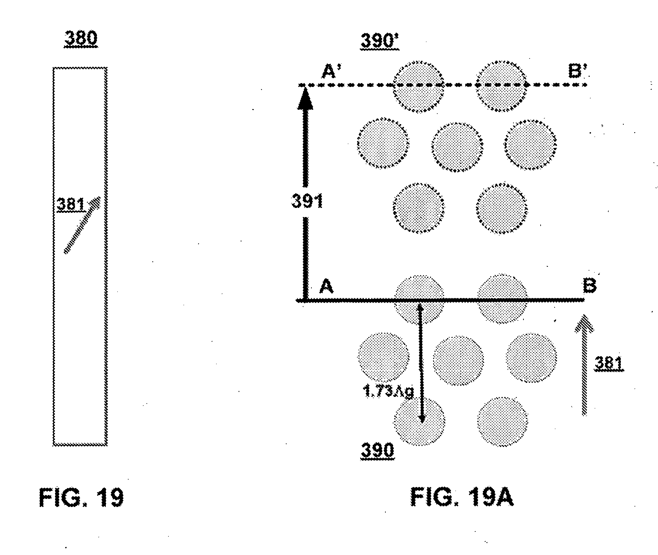

FIG. 19 is a diagram of a birefringent walk-off block 380, illustrating the orientation of the optical axis 381 of the birefringent walk-off block relative to the multicore collimated beam. FIG. 19A is a diagram illustrating an exemplary output beam 390 of a 7-core collimator. The birefringent walk-off block 380 causes a beam displacement 391 in the direction of arrow 381, resulting in displaced beam 390'.

For the multicore isolator, circulator and the variable attenuator shown in FIGS. 16-18 to function properly, it is important that the birefringent blocks produce enough lateral displacement of the beam in order to prevent crosstalk resulting from coupling of light entering from Port 2 into Port 1. In other words, the beam displacement should be greater than the diameter of the beam exiting the multicore collimator.

Thus, it is important that birefringent crystal with a large walk-off angle be used as the walk-off block. For example, for an incidence angle of, or near, 45 degrees, a rutile ($TiO_2$) birefringent crystal has a walk-off angle of approximately 6 degrees. Birefringent blocks having a thickness of ~5mm can produce a lateral beam displacement of 0.5mm, which would exceed the beam diameter of the multicore collimated beam in the above-described practices of the invention. Further optimization can be achieved by employing a configuration in which the optical axis has a perpendicular orientation relative to the line joining the center of the two beams A and B shown in FIG. 19. In the depicted example, the separation between these two beams is approximately 1.73A, where A is the beam-to-beam separation, and is smaller than the separation between the diagonally located beams.

Besides having a large walk-off angle, it is further desirable to use a birefringent optical crystal with a large refractive index. According to Eq. 1, working distance generally increases proportionately with the refractive index. Thus, a larger refractive index will result in a larger working distance, thereby allowing for incorporating thicker birefringent crystals. Rutile, which has an ordinary refractive index $n_o$=2.5 and extraordinary refractive index $n_e$=2.7, is thus useful in this regard.

### 2.11 Optical Isolator

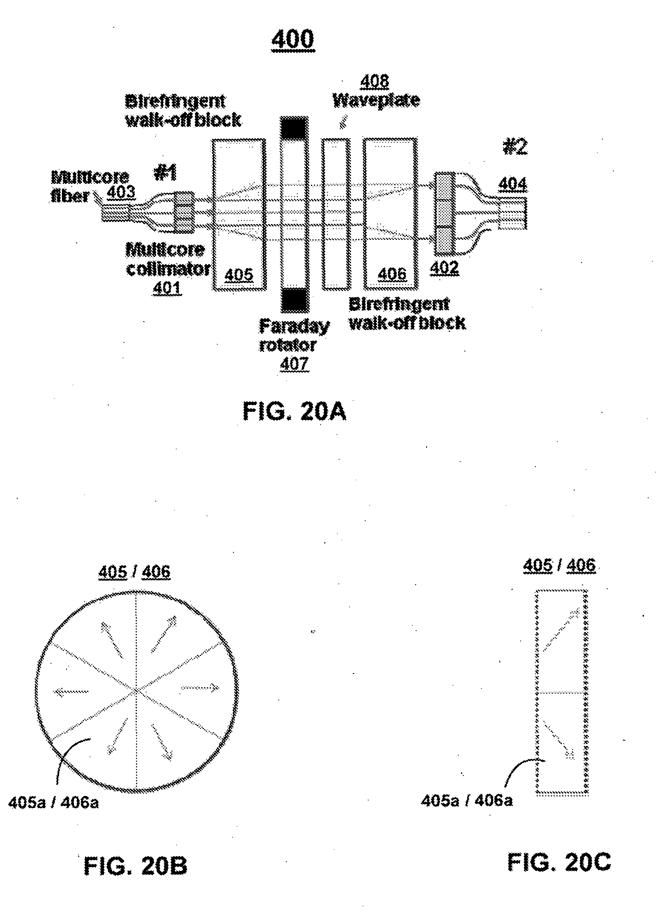

FIG. 20A is a diagram of an optical isolator 400, according to a further aspect of the invention, employing a multi-segment birefringent walk-off blocks, wherein the walk-off angle for each segment of the walk-off blocks points in a radially outward direction.

Optical isolator 400 comprises first and second collimators 401 and 402 connected to respective first and second MCFs 403 and 404. A first multi-segment birefringent walk-off block 405 is positioned in free space at the output of first collimator 401, and a second multi-segment birefringent walk-off block 406 is positioned in free space at the output of second collimator 402.

Positioned in free space between the two birefringent walk-off blocks are a 45-degree Faraday rotator mirror 407 and a and a λ/2 waveplate (or phase retardation plate) 408. The collimated beams from the multicore collimator are incident at a normal to the air-crystal interface of the birefringent blocks, and are split into two rays of orthogonal polarizations.

The perspective optical axis of each individual segment of the multi-segment birefringent walk-off blocks is aligned in a radial direction from a center point that is aligned with the center cores of the first and second multicore fibers 403 and 404. FIGS. 20B and 20C show, respectively, front and side views of birefringent walk-off blocks 405/406 illustrating segments 405a/406a. The arrows indicate the direction of each respective optical axis.

The principle of operation of isolator 400 is substantially the same as the operation of isolator 320, shown in FIGS. 16A and 16B. The birefringent walk-off blocks cause light to be divided into ordinary rays that travel in a straight line through the blocks, and into extraordinary raise that travel along and angled path. The one-way operation of the Faraday rotator and the wave plate in combination with the walk-off blocks causes the ordinary and extraordinary rays to recombine when light travels in a left-to-right direction, but to become further separated when light travels in a right-to-left direction.

In the present example, it will be seen that the right collimator has a larger diameter than that of the left collimator in order to "catch" the left-to-right recombined ordinary and extraordinary rays.

Generally speaking, because the walk-off angles point in a radial direction, the isolator 400 in FIG. 20A is not suitable providing isolation for a centrally located MCF core.

### 2.12 Multicore WDM or Coupler

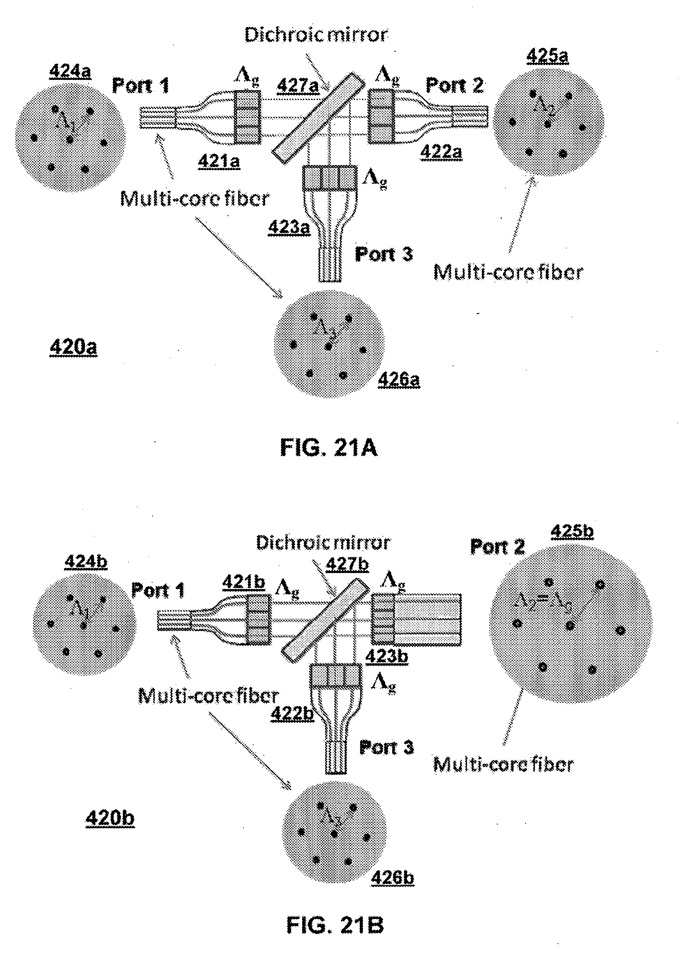

FIGS. 21A-21C are a series of diagrams illustrating three multicore wavelength division multiplexers (WDMs) 420a, 420b, and 420c according to further aspects of the invention. It will be appreciated that the depicted configurations may also be used for other types of multicore coupling devices.

In FIG. 21A, WDM 420a comprises first, second, and third collimators 421a, 422a, and 423a connected to respective first, second, and third multicore fibers 424a, 425a, and 426a defining, respectively, Port 1, Port 2 and Port 3. A dichroic mirror 427a is positioned in free space between the first and second collimators. By appropriately configuring the dichroic mirror 427a, it is possible to combine or split, two waves of different wavelength.

The respective core-to-core distance $\Lambda_1$, $\Lambda_2$, and $\Lambda_3$ in each of the three multicore fibers can be chosen arbitrarily. In FIG. 21A, the respective core-to-core spacing in each of the three multicore fibers is the same, or substantially the same, and the core pitch of the multicore fibers are smaller than the pitch $\Lambda_g$ of the respective GRIN lenses. The dichroic mirror 427a is configured as a partial reflection filter. Light launched from Port 2 can be split between Port 1 and Port 3. The multicore splitter can be configured to have different splitting ratios, such as 3dB, 10dB, 20dB, and the like.

It is also possible to use a multicore fiber with a core-to-core spacing that is substantially identical with the core-to-core spacing of the multicore multimode fiber (i.e., the lens-to-lens spacing of the GRIN lenses). Such a coupler configuration 420b is shown in FIG. 21B, in which elements 421b-427b correspond to elements 421a-427a in FIG. 21A. The core pitch $\Lambda_2$ of multicore fiber 425b at Port 2 is the same as the pitch $\Lambda_g$ of the GRIN lens array in collimator 422a. It will be seen that in this case a tapered multicore section is not required.

FIG. 21C is a diagram illustrating a coupler 240c according to a further aspect of the invention, in which elements 421c-427c correspond to elements 421a-427a in FIG. 21A. A fourth multicore collimator 428c and MCF 429c are installed to create a four-port coupler.

According to a further aspect of the invention, the WDM is provided with filters that are configured to have non-uniform reflection properties in order to control the optical properties of light coupled into individual cores. The dichroic mirror can have transmission/reflection properties that depend on wavelength, making the device function as a multicore WDM coupler.

### 2.13 Dichroic Mirror

FIG. 22 shows a pair of diagrams of a dichroic, dielectric mirrors 440, 442 having multiple individual regions 441, 443 with different reflection properties.

In FIG. 22, dichroic mirror 440 is a multi-layer dielectric coated mirror. Such a mirror may partially reflect, fully reflect, or fully transmit light with a given wavelength. With appropriate design of the dielectric coating, the same mirror can behave differently at another wavelength. In the depicted device, such a mirror can function as a beam splitter, beam combiner, wavelength division multiplexer, or the like. Dichroic mirror 442 is similar configured.

The depicted mirrors 440, 442 can be configured so as to allow them to be translated or rotated in order to assign different reflection properties to the cores, allowing re-configurability with respect to pass-band and stop-band properties. Also, each mirror 440, 442 can be configured to have a different perspective amount of attenuation or reflection coefficient, so as to allow stepwise control of attenuation of loss corresponding to each core.

Using filters with non-uniform reflection properties allows coupling between three MCFs having different amounts of core-to-core spacing, simply by choosing appropriate taper ratios for the tapered couplers. The arrangement is also useful for pumping multicore erbium-doped fibers (MC-EDFs), wherein signal light entering from a first port and pump light entering from a second port are combined at a third port. Such a configuration can be applied to other types of gain fiber.

## 2.14 Beam Combiner

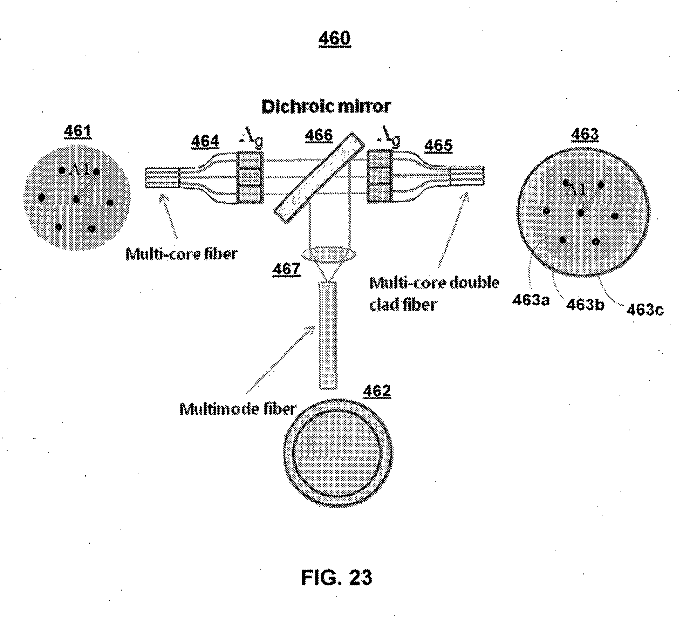

FIG. 23 is a diagram of a beam combiner 460, according to a further aspect of the invention, wherein the light outputs of a multicore fiber 461 and a multimode fiber 462 are combined and launched into a multicore double-clad fiber 463 having an inner cladding 463a, a plurality of signal cores 463b surrounded by the inner cladding 463a, and an outer cladding 463c.

The beam combiner further comprises a first collimator 464 connected to multicore fiber 461, a second collimator 465 connected to multicore double-clad fiber 463, a dichroic mirror 466, and collimating optics 467. The light outputs of each core of multicore fiber 461 pass through dichroic mirror 466 and are coupled to corresponding cores 463b of multicore double-clad fiber 463. The light output of the multimode fiber 462 is coupled with inner cladding 463a of the multicore double-clad fiber 463 via optics 467 and dichroic mirror 466. Alternatively, the output from multimode fiber 463 can be launched as a pumping input into the outer cladding 463c of multicore double-clad fiber 463.

## 3. Other Optical Devices

It is noted that structures and techniques described herein have utility beyond their specific use in a collimator-related application.

For example, SMT 41 can be fabricated a multicore fiber comprising a plurality of cores extending through a common cladding. A length of the multicore fiber can be thermally tapered and trimmed to create a tapered fiber segment having an input endface and an output endface with different cladding diameters. As described above, it would be possible to configure the multicore fiber such that one or more of its cores has a refractive index profile that has mode field diameter that is nominally constant, even if tapering causes a significant change in core diameter. Using such a multicore fiber would mean that the tapered fiber segment would have one or more cores having a diameter that is nominally equal at the input endface and the output endface that is nominally equal, irrespective of the difference in cladding diameter.

GRIN lens array 42 can also be fabricated as a separate component from a segment of a multicore fiber, in which a plurality of cores extends through a common cladding. At least one of the multicore fiber cores is configured to have a gradient-index profile, wherein the profile has a nominally parabolic shape with respect to the center of the at least one core. Each such core with a gradient-index profile has the same gradient $g$.

In one practice, the GRIN lens array has a length that is nominally equal to $l_{opt}$, discussed above. In a further practice, the fiber segment has a length that is nominally equal to a quarter of the pitch of the fiber segment, or an integral multiple thereof.

## Claims

1. A multicore collimator (40) for collimating light signals transmitted by respective cores of a multicore fiber (301-307), comprising:

   a gradient-index lens array (42) including a plurality of individual gradient-index lenses (421-427) corresponding to respective cores of the multicore fiber (301-307), wherein the array of gradient-index lenses (42) has a lens-to-lens spacing that is larger than the core-to-core spacing of the multicore fiber (30),
   a taper (41) at an input end of the array of gradient-index lenses (42) for providing a tapered transition between the core-to-core spacing of the multicore fiber and the lens-to-lens spacing of the array of gradient-index lenses (42),
   wherein the taper (41) comprises a tapered coupler including a plurality of individual single-mode or multimode cores (411-417) corresponding to respective individual cores of the multicore fiber (301-307), wherein the cores of the tapered coupler (411-417) extend through a coupler body between a coupler input end (41 a) and a coupler output end (41b), and wherein the input end of the coupler (41a) is connected to an output end of the multicore fiber (30a), and receives the transmitted light signals (31a-c) as an input therefrom,
   wherein the coupler (41) has an input core-to-core spacing matching the core-to-core spacing of the multicore fiber (30) and an output core-to-core spacing matching the lens-to-lens spacing of the array of gradient-index lenses (42), and
   wherein the array of gradient-index lenses (42) is configured to receive and collimate light signals (32a-c) transmitted from the multicore fiber (30) through the taper (41), and to provide the collimated light signals as an output (33a-c) at an output end of the gradient-index lens array (42b).

2. The multicore collimator (40) of claim 1,
wherein the gradient-index lens array (42) comprises a segment of a multimode, multicore fiber,
wherein individual gradient-index lenses (421-427) are provided by individual cores of the multimode, multicore fiber segment,
and wherein the multimode, multicore fiber segment is configured to have a length, index profile and core dimension that maximizes working distance.

3. The multicore collimator (40) of claim 2, wherein the multimode multicore fiber segment has a length that is substantially equal to an optimal length $l_{opt}$ that is configured to achieve a maximum working distance $d_{max}$ in accordance with:

$$d_{\max} = \frac{\pi n_m}{2\lambda}\left(\omega_{02}^2 - \omega_{01}^2\right)$$

where $n_m$ is the refractive index of the medium outside the lens, $\lambda$ is wavelength, $\omega_{02}$ is the Gaussian beam parameter corresponding to the most expanded region of the beam inside the gradient-index lens, and radius $\omega_{01}$ is beam spot radius.

4. The multicore collimator (200) of claim 1, wherein the gradient-index lens array (203) is tapered, so as to provide a tapered transition between the output spacing of the tapered coupler and a wider spacing at the output end of the lens array.

**Patentansprüche**

1. Ein Multikern-Kollimator (40) zum Kollimieren von Lichtsignalen, die durch jeweilige Kerne einer Multikern-Faser (301-307) übertragen werden, der folgende Merkmale aufweist:

ein Gradienten-Index-Linsenarray (42), das eine Mehrzahl einzelner Gradienten-Index-Linsen (421-427) umfasst, die jeweiligen Kernen der Multikern-Faser (301-307) entsprechen, wobei das Array von Gradienten-Index-Linsen (42) eine Linse-zu-Linse-Beabstandung aufweist, die größer ist als die Kern-zu-Kern-Beabstandung der Multikern-Faser (30),
eine Verjüngung (41) an einem Eingangsende des Arrays von Gradienten-Index-Linsen (42) zum Bereitstellen eines verjüngten Übergangs zwischen der Kern-zu-Kern-Beabstandung der Multikern-Faser und der Linse-zu-Linse-Beabstandung des Arrays von Gradienten-Index-Linsen (42),
wobei die Verjüngung (41) einen verjüngten Koppler aufweist, der eine Mehrzahl einzelner Einmoden- oder Multimodenkerne (411-417) umfasst, die jeweiligen einzelnen Kernen der Multikern-Faser (301-307) entsprechen, wobei sich die Kerne des verjüngten Kopplers (411-417) durch einen Kopplerkörper zwischen einem Kopplereingangsende (41a) und einem Kopplerausgangsende (41b) hindurch erstrecken und wobei das Eingangsende des Kopplers (41a) mit einem Ausgangsende der Multikern-Faser (30a) verbunden ist und die übertragenen Lichtsignale (31a-c) als Eingabe von demselben empfängt,
wobei der Koppler (41) eine eingangsseitige Kern-zu-Kern-Beabstandung, die mit der Kern-zu-Kern-Beabstandung der Multikern-Faser (30) übereinstimmt, und eine ausgangsseitige Kern-zu-Kern-Beabstandung, die mit der Linse-zu-Linse-Beabstandung des Arrays von Gradienten-Index-Linsen (42) übereinstimmt, aufweist und wobei das Array von Gradienten-Index-Linsen (42) dazu konfiguriert ist, Lichtsignale (32a-c), die von der Multikern-Faser (30) durch die Verjüngung (41) übertragen werden, zu empfangen und zu kollimieren und die kollimierten Lichtsignale als Ausgabe (33a-c) an einem Ausgangsende des Gradienten-Index-Linsenarrays (42b) bereitzustellen.

2. Der Multikern-Kollimator (40) gemäß Anspruch 1,
bei dem das Gradienten-Index-Linsenarray (42) ein Segment einer Multimoden-, Multikern-Faser aufweist,
bei dem einzelne Gradienten-Index-Linsen (421-427) durch einzelne Kerne des Multimoden-, Multikern-Fasersegments bereitgestellt werden,
und bei dem das Multimoden-, Multikern-Fasersegment dazu konfiguriert ist, eine Länge, ein Indexprofil und eine Kernabmessung aufzuweisen, die den Arbeitsabstand maximieren.

3. Der Multikern-Kollimator (40) gemäß Anspruch 2, bei dem das Multimoden-, Multikern-Fasersegment eine Länge aufweist, die im Wesentlichen gleich einer optimalen Länge $l_{opt}$ ist, die dazu konfiguriert ist, einen maximalen Arbeitsabstand $d_{max}$ gemäß:

$$d_{\max} = \frac{\pi n_m}{2\lambda}\left(\omega_{02}^2 - \omega_{01}^2\right)$$

zu erzielen, wobei $n_m$ der Brechungsindex des Mediums außerhalb der Linse ist, $\lambda$ die Wellenlänge ist, $\omega_{02}$ der Gaußsche Strahlenparameter ist, der der ausgedehntesten Region des Strahls innerhalb der Gradienten-Index-Linse entspricht, und der Radius $\omega_{01}$ ein Strahlfleckradius ist.

4. Der Multikern-Kollimator (200) gemäß Anspruch 1, bei dem das Gradienten-Index-Linsenarray (203) verjüngt ist, um einen verjüngten Übergang zwischen der ausgangsseitigen Beabstandung des verjüngten Kopplers und einer breiteren Beabstandung an dem Ausgangsende des Linsenarrays bereitzustellen.

## Revendications

1. Collimateur à noyaux multiples (40) pour collimater des signaux lumineux transmis par les noyaux respectifs d'une fibre à noyaux multiples (301 à 307), comprenant:

   un réseau de lentilles à gradient d'indice (42) comportant une pluralité de lentilles à gradient d'indice individuelles (421 à 427) correspondant aux noyaux respectifs de la fibre à noyaux multiples (301 à 307), où le réseau de lentilles à gradient d'indice (42) présente un espacement entre lentilles qui est plus grand que l'espacement entre noyaux de la fibre à noyaux multiples (30),
   un rétrécissement conique (41) à une extrémité d'entrée du réseau de lentilles à gradient d'indice (42) pour permettre une transition conique entre l'espacement entre noyaux de la fibre à noyaux multiples et l'espacement entre lentilles du réseau de lentilles à gradient d'indice (42),
   dans lequel le rétrécissement conique (41) comprend un coupleur conique comportant une pluralité de noyaux monomode ou multimode individuels (411 à 417) correspondant aux noyaux individuels respectifs de la fibre à noyaux multiples (301 à 307), dans lequel les noyaux du coupleur conique (411 à 417) s'étendent à travers un corps de coupleur entre une extrémité d'entrée de coupleur (41a) et une extrémité de sortie de coupleur (41b), et dans lequel l'extrémité d'entrée du coupleur (41a) est reliée à une extrémité de sortie de la fibre à noyaux multiples (30a), et reçoit les signaux lumineux transmis (31a à c) comme entrée de cette dernière,
   dans lequel le coupleur (41) présente un espacement entre noyaux d'entrée correspondant à l'espacement entre noyaux de la fibre à noyaux multiples (30) et un espacement entre noyaux de sortie correspondant à l'espacement entre lentilles du réseau de lentilles à gradient d'indice (42), et
   dans lequel le réseau de lentilles à gradient d'indice (42) est configuré pour recevoir et collimater des signaux lumineux (32a à c) transmis de la fibre à noyaux multiples (30) à travers le rétrécissement conique (41), et pour fournir les signaux lumineux collimatés comme sortie (33a à c) à une extrémité de sortie du réseau de lentilles à gradient d'indice (42b).

2. Collimateur à noyaux multiples (40) selon la revendication 1, dans lequel le réseau de lentilles à gradient d'indice (42) comprend un segment d'une fibre à noyaux multiples multimode,
   dans lequel les lentilles à gradient d'indice individuelles (421 à 427) sont fournies par des noyaux individuels du segment de fibre à noyaux multiples multimode,
   et dans lequel le segment de fibre à noyaux multiples multimode est configuré de manière à présenter une longueur, un profil d'indice et une dimension de noyau qui maximisent la distance de fonctionnement.

3. Collimateur à noyaux multiples (40) selon la revendication 2, dans lequel le segment de la fibre à noyaux multiples multimode présente une longueur qui est sensiblement égale à une longueur optimale $l_{opt}$ qui est configurée pour obtenir une distance de fonctionnement maximale $d_{max}$ selon:

$$d_{max} = \frac{\pi n_m}{2\lambda}(\omega_{02}^2 - \omega_{01}^2)$$

où $n_m$ est l'indice de réfraction du milieu à l'extérieur de la lentille, $\lambda$ est la longueur d'onde, $\omega_{02}$ est le paramètre de faisceau gaussien correspondant à la région la plus étendue du faisceau à l'intérieur de la lentille à gradient d'indice, et le rayon $\omega_{01}$ est le rayon de spot de faisceau.

4. Collimateur à noyaux multiples (200) selon la revendication 1, dans lequel le réseau de lentilles à gradient d'indice (203) est conique, de manière à permettre une transition conique entre l'espacement de sortie du coupleur conique et un espacement plus large à l'extrémité de sortie du réseau de lentilles.

**FIG. 1A**

**FIG. 1B**

EP 2 656 137 B1

**FIG. 1C**

**FIG. 1D**

**FIG. 2**

60

FIG. 3A

60'

FIG. 3B

80

FIG. 4

**FIG. 5**

**FIG. 6**

<u>140</u>

Λg

<u>141</u>
Graded-
index core

<u>142</u>
Cladding

**FIG. 7A**

<u>150</u>

Λg

<u>151</u>
Graded-
index core

<u>152</u>
Cladding

**FIG. 7B**

<u>160</u>

$\omega o_2=5\mu m$

$\omega o_3=50\mu m$

$\omega o_1=5\mu m$

500

500

<u>162</u>

<u>163</u>

2wo

<u>164</u>

<u>161</u>   1200

<u>165</u>

1200

**Multicore fiber collimator**

$3000\mu m$

**FIG. 8**

## 180

**FIG. 9**

## 200

**FIG. 10A**

## 210

**FIG. 10B**

**220**

**222**

Multicore SMF

**221**

Tapered Multicore
Multimode Fiber

**FIG. 11A**

**230**

**232**

**231**

**FIG. 11B**

**240**

**241**

**241a**

125 um
7 core fiber

**240a**

**FIG. 12**

Multicore SMF
~0.5P    264

261

260

Multicore Multicore
SM-SMT MM fiber
262         263

FIG. 13

280

Bulk element 1        Bulk element 2

~0.25P              ~0.5P              ~0.25P

$2\omega_1$          $2\omega_2$

283                                              284

281              285              282

286                  287

FIG. 14

300

Dielectric
mirror

#1    301                    $\theta$    302    #2

303                                              304

305

FIG. 15

FIG. 16A

FIG. 16B

**340**

**346**

**#3**

**349**
**Faraday**
**rotator**

**350**
**Waveplate**

**Polarization beam**
**Splitter cube**

**352**

**343**

**#2**

**#1**

**347**

**342**

**345**

**344**

**341**

**Reflector**
**prism**

**351**

**348**

**Birefringent**
**walk-off block**

**FIG. 17**

**360**

**366**

**#3**

**369**
**Faraday**
**rotator**

**370**
**Waveplate**

**Polarization beam**
**Splitter cube**

**372**

**363**

**#1**

**367**

**364**

**361**

**Reflector**
**prism**

**371**

**368**

**MEMS**

**362**

**Birefringent**
**walk-off block**

**FIG. 18**

380

381

FIG. 19

390'

A'      B'

391

A      B

381

1.73Λg

390

FIG. 19A

**400**

FIG. 20A

405 / 406

405a / 406a

FIG. 20B

405 / 406

405a / 406a

FIG. 20C

FIG. 21A

FIG. 21B

**FIG. 21C**

**FIG. 22**

**460**

**Dichroic mirror**

461  464  466  465  463

Multi-core fiber  467  Multi-core double clad fiber

463a  463b  463c

Multimode fiber  462

**FIG. 23**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7400804 B1
- US 04506411 A
- US 049597 A
- US 7340138 B
- US 20080267560 A